# EUROPÄISCHE PATENTSCHRIFT

(11) **EP 1 713 668 B1**
(45) Veröffentlichungstag und Bekanntmachung des Hinweises auf die Patenterteilung: **10.10.2012**
(21) Anmeldenummer: 04804799.7
(22) Anmeldetag: 14.12.2004
(51) Int. Cl.: B60S 1/04

(54) **SCHEIBENWISCHVORRICHTUNG, INSBESONDERE FÜR EIN KRAFTFAHRZEUG**
WINDSCREEN WIPING DEVICE, PARTICULARLY FOR A MOTOR VEHICLE
DISPOSITIF D'ESSUIE-GLACE NOTAMMENT DESTINE A UN VEHICULE

(30) Priorität: 06.02.2004 DE 102004006016
(43) Veröffentlichungstag der Anmeldung: 25.10.2006
(73) Patentinhaber: ROBERT BOSCH GMBH, 70442 Stuttgart (DE)
(72) Erfinder: KRAUS, Achim, 77815 Buehl (DE); ZIMMER, Joachim, 77880 Sasbach (DE); RAPP, Juergen, 77886 Lauf (DE); WICKERMANN, Hans, 77815 Buehl (DE); FLEISCHER, Claus, 77815 Buehl (DE); KARLE, Marc-Oliver, 70376 Stuttgart (DE); REISER, Christian, 76275 Ettlingen (DE); VOLZ, Heiko, 77855 Achern (DE); JOERGER, Martin, 77654 Offenburg (DE); KOEHN, Swen, 77815 Buehl-Vimbuch (DE)
(86) Internationale Anmeldenummer: PCT/EP2004/053439
(87) Internationale Veröffentlichungsnummer: WO 2005/075265

(56) Entgegenhaltungen:
- DE-A1- 19 546 906
- DE-A1- 19 546 909
- PATENT ABSTRACTS OF JAPAN Bd. 2002, Nr. 02, 2. April 2002 (2002-04-02) -& JP 2001 294127 A (ASMO CO LTD; HONDA MOTOR CO LTD), 23. Oktober 2001 (2001-10-23)

## Beschreibung

### Stand der Technik

Die Erfindung betrifft eine Scheibenwischvonichtung, insbesondere für ein Kraftfahrzeug, nach Gattung des unabhängigen Anspruchs.

Es sind schon zahlreiche Scheibenwischvorrichtungen für Kraftfahrzeuge bekannt, die ein Wischerlager aufweisen, das eine Wischerwelle trägt, die durch Einwirken einer axialen Kraftkomponente gegenüber dem Wischerlager verschiebbar ist.

Aus der DE-A-198 51 816 ist beispielsweise eine Scheibenwischvorrichtung bekannt, bei der die Wischerwelle einen radialen Einstich aufweist, in dem eine Sicherung zur axialen Fixierung der Wischerwelle im Wischerlager sitzt. Durch Einwirken einer definierten axialen Kraftkomponente auf die Wischerwelle ist diese Sicherung verschiebbar, wodurch die Wischerwelle gegenüber dem Wischerlager verschiebbar ist. Eine derartige axiale Kraftkomponente kann beispielsweise durch einen Fußgänger verursacht sein, der bei einem Unfall auf die Wischerwellen des Kraftfahrzeugs aufprallt. Die Wischerwellen weichen in diesem Fall zurück und verschwinden innerhalb der Karosserie des Fahrzeugs, so dass die Verletzungsgefahr des Fußgängers reduziert wird. Die dort gezeigte Ausbildung ist jedoch aufwändig und kostenintensiv und deshalb insbesondere für preisgünstige Kraftfahrzeuge nur begrenzt geeignet.

Aus der DE-A-195 46 909 ist eine Scheibenwischvorrichtung mit den Merkmalen des Oberbegriffs des Anspruchs 1 bekannt.

### Vorteile der Erfindung

Die erfindungsgemäße Scheibenwischvorrichtung mit den Merkmalen des Hauptanspruchs hat den Vorteil, dass eine einfache Realisierung eines Fußgängeraufprallschutzes ermöglicht wird, die darüber hinaus kostengünstig ist und eine genaue Einstellung der zum zurückweichen der Wischerwelle notwendigen axialen Kraftkomponente ermöglicht Dies wird dadurch erzielt, dass die Sicherung einen Buchsenabschnitt mit einer Eindrückung aufweist, die in den Einstich der Wischerwelle eingreift.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn der Einstich radial umlaufend ausgebildet ist. Dadurch kann der Einstich beim abdrehen der Wischerwelle in einfacher Weise vorgenommen werden und es wird ein weiterer Bearbeitungsschritt zur Herstellung des Einstichs gespart.

Durch eine wannenförmige Ausbildung des Einstichs kann die axiale Kraftkomponente besonders genau eingestellt werden.

Ist die Eindrückung im Buchsenabschnitt der Sicherung radial umlaufend ausgebildet, so kann auch die Sicherung in einer sehr einfachen Weise hergestellt werden und ohne Beachtung der radialen Position auf die Wischerwelle aufgesteckt werden.

Herbei ist es besonders vorteilhaft, wenn die Eindrückung im Querschnitt wannenförmig ist, um eine genaue Einstellung der notwendigen axialen Kraftkomponente vorzunehmen.

Erfindungsgemäβ ist an den Buchsenabschnitt ein Flanschabschnitt angeführt, der mit dem Wischerlager wirkverbunden ist. Dadurch kann die beim Aufprall eines Fußgängers wirkende axiale Kraftkomponente optimal auf die Sicherung übertragen werden, da eine große Fläche der Sicherung am Wischerlager abgestützt ist.

Durch einen buchsenförmigen Verschlussabschnitt, der sich an den Flanschabschnitt anfügt, kann das Wischerlager vor Verschmutzung und Feuchtigkeit geschützt werden, wobei auf ein zusätzliches Verschlusselement für das Wischerlager verzichtet werden kann.

Eine besonders einfache und kostengünstige Herstellung der Sicherung wird durch einen im wesentlichen rotationssymmetrischen und im Querschnitt im wesentlichen S-förmigen Aufbau der Sicherung erzielt.

Besonders vorteilhaft ist es, wenn die rotationssymmetrische Sicherung einen radialen Spalt aufweist. Über diesen Spalt kann sich die Sicherung bei einer entsprechenden Kraftkomponente aufbiegen, so dass auch kleine notwendige Kraftkomponenten realisiert werden können.

Einfach uns kostengünstig lässt sich die Sicherung als Stanzbiegeteil aus Blech ausbilden.

Besonders vorteilhaft ist darüber hinaus die Ausbildung der Sicherung aus faserverstärktem Kunststoff.

### Zeichnungen

Ein Ausführungsbeispiel der Erfindung ist in den Zeichnungen dargestellt und in der nachfolgenden Beschreibung näher erläutert.

### Es zeigen

- Figur 1: eine erfindungsgemäße Scheibenwischvorrichtung in einer schematischen Darstellung,
- Figur 2: ein Wischerlager einer erfindungsgemäβen Scheibenwischvorrichtung in einer Teilschnittdarstellung und
- Figur 3: den Einstich in die Wischerwelle mit der Sicherung im Detail.

### Beschreibung des Ausführungsbeispiels

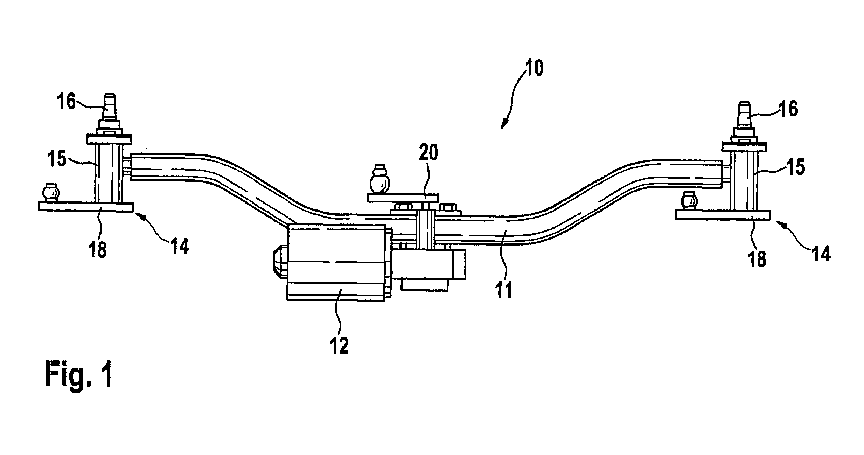

In Figur 1 ist eine erfindungsgemäße Scheibenwischvorrichtung 10 schematisch dargestellt. Diese besteht im Wesentlichen aus einem Trägerrohr 11, an dem ein Wischermotor 12 befestigt ist. Das Trägerrohr 11 weist zwei Enden auf, an denen jeweils ein Wischerlager 14 angeordnet ist.

Das Wischerlager 14 besteht im Wesentlichen aus einem rohrförmigen Abschnitt 15, der von einer Wischerwelle 16 durchgriffen wird. Die Wischerwelle 16 selbst ist an einem Ende mit einer Antriebskurbel 18 drehfest verbunden, die über eine der Übersichtlichkeit halber nicht gezeichnete Schubstange mit einer vom Wischermotor 12 angetriebenen Abtriebskurbel 20 verbunden ist.

Im Betrieb vollführt die Abtriebskurbel 20 eine Rotations- oder eine Hin- und Herbewegung, wodurch über die Schubstange die Antriebskurbel 18, und damit die Wischerwelle 16 in eine Pendelbewegung versetzt wird.

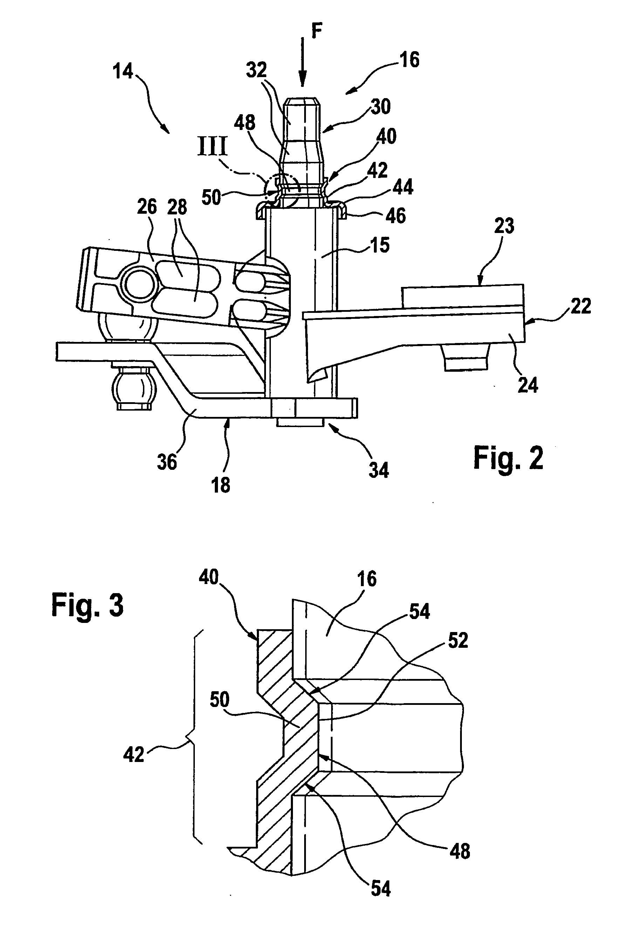

In Figur 2 ist das Wischerlager 14 mit der Wischerwelle 16 in einer Teilschnittdarstellung dargestellt. Das Wischerlager 14 besteht im Wesentlichen aus dem rohrförmigen Abschnitt 15, der von der Wischerwelle 16 durchgriffen wird. Am rohrförmigen Abschnitt 15 ist ein Befestigungsabschnitt 22 angeordnet, der zur Befestigung der Scheibenwischvorrichtung 10 am Kraftfahrzeug dient.

Der Befestigungsabschnitt 22 ist im Wesentlichen als ebene Platte ausgebildet, die im Wesentlichen senkrecht zur durch die Wischerwelle gebildeten Achse angeordnet ist. In der Platte des Befestigungsabschnitts 22 ist eine Öflnung 23 vorgesehen, die zur Aufnahme von Befestigungsmitteln, wie beispielsweise Schrauben oder Nieten, dient. Zur Verstärkung ist der Befestigungsabschnitt 22 noch mit einer umlaufenden Seitenwand 24 versehen, die sich kragenartig von der Berandung der ebenen Platte aus erstreckt.

Auf der radial vom Befestigungsabschnitt 22 abgewandten Seite des rohrförmigen Abschnitts 15 ist ein Befestigungsstutzen 26 angeordnet, der von im Wesentlichen zylindrischer Gestalt ist und sich etwa senkrecht zu der durch die Wischerwelle 16 gebildeten Achse nach außen erstreckt. Dieser Befestigungsstutzen 26 dient zur Befestigung des Wischerlagers 14 am Trägerrohr 11 und weist hierzu entsprechende Befestigungselemente 28 auf, so dass der Befestigungsstutzen 26 mit dem Trägerrohr 11 vercrimpt werden kann. In einer Variation kann das Wischerlager 14 jedoch auch einstückig mit dem Trägerrohr 11 ausgebildet sein.

Die Wischerwelle 16 weist zwei Enden 30, 34 auf, die jeweils aus dem rohrförmigen Abschnitt des Wischerlagers 14 herausragen. Am ersten freien Ende 30 ist ein Konus und ein Gewinde als Halterungselemente 32 vorgesehen, an denen ein Wischerarm, der hier aus Gründen der Übersichtlichkeit halber nicht gezeichnet ist, befestigt werden kann. Mit dem anderen Ende 34 der Wischerwelle 16 ist die Antriebskurbel 18 drehfest verbunden. Diese umfasst im Wesentlichen eine längliche Kurbelplatte 36, die an ihrem einen Ende mit der Wischerwelle 16 verbunden ist und an ihrem anderen Ende einen Kugelgelenkbolzen 38 trägt, der zur Verbindung mit der Schubstange vorgesehen ist.

Auf der Wischerwelle 16 sitzt die Sicherung 40, die im Wesentlichen drei Abschnitte 42, 44, 46 aufweist und zwar einen Buchsenabschnitt 42, an den sich ein Flanschabschnitt 44 anschließt, durch den die Wischerwelle 16 axial am rohrförmigen Abschnitt 15 des Wischerlagers 14 abgestützt ist. An diesen Flanschabschnitt 44 wiederum schließt sich ein Verschlussabschnitt 46 an. Die Wischerwelle 16 und die Sicherung 40 sind hierbei im Querschnitt gezeichnet.

Die Wischerwelle 16 weist nahe dem rohrförmigen Abschnitt 15 einen Einstich 48 auf, der wannenförmig und radial umlaufend ausgebildet ist. Die Sicherung 40 weist korrespondierend in ihrem Buchsenabschnitt 42 eine Eindrückung 50 auf, die formschlüssig mit dem Einstich 48 in Eingriff steht.

Bei der Herstellung kann die Eindrückung 50 in der Sicherung 40 bereits vorgesehen sein und die Sicherung 40 mit Kraft auf die Wischerwelle 16 geschoben sein, bis die Eindrückung 50 in den Einstich 48 eingreift. In einer Variation ist es auch möglich, die Sicherung 40 ohne die Eindrückung 50 auf die Wischerwelle 16 aufzuschieben und erst dann die Eindrückung 50 durch eine äußere Krafteinwirkung in den Einstich 48 einzudrücken.

In Figur 3 ist die Eindrückung 50 der Sicherung 40 und der Einstich 48 der Wischerwelle 16 im Detail gezeigt. Der Einstich 48 ist wannenförmig ausgebildet und weist daher eine Grundfläche 52 und eine um einen Winkel von etwa 45° dazu geneigte Seitenfläche 54 auf, die dem freien Ende 30 der Wischerwelle zugewandt ist. Auf der dem freien Ende 30 abgewandten Seitenfläche 54 kann auch ein Winkel von 90° vorgesehen sein, da beim Aufprall eines Fußgängers die definierte axiale Kraftkomponente auf das freie Ende 30 wirkt, so dass die Sicherung 50 in Richtung des freien Endes geschoben wird. Durch die Neigung der dem freien Ende 30 zugewandten Seitenfläche 54 gleitet die Sicherung 50 dann auf einer schiefen Ebene in Richtung des freien Endes 30. In einer Variation kann beispielsweise auch auf die Grundfläche 52 verzichtet werden und ein V-förmiger Einstich 48 vorgesehen sein. In einer weiteren Variation kann dieser Einstich 58 auch über eine dem freien Ende 30 zugewandte schräge Seitenfläche 54 verfügen, die direkt an die andere, dem freien Ende 30 abgewandte Seitenfläche 54 übergeht, wobei für die dem freien Ende 30 zugewandte Seitenfläche eine Schräge und für die abgewandte Seitenfläche ein Winkel von 90° vorgesehen ist.

In einer weiteren Variation ist der Einstich 48 nicht umlaufend, sondern als Ausnehmung ausgebildet, wobei die Eindrückung 50 der Sicherung 40 oder genauer des Buchsenabschnitts 42 der Sicherung 50 entsprechend ausgebildet ist. In diesem Fall ist nur eine quasipunktuelle anstatt umlaufende Eindrückung 50 vorgesehen.

Diese Möglichkeiten können selbstverständlich auch kombiniert werden. In diesem Fall wäre der Einstich 48 zwar umlaufend ausgebildet, die Eindrückung 50 der Sicherung 40 jedoch nur punktuell angeordnet.

Das Wischerlager 14 ist mit dem rohrförmigen Abschnitt 15, dem Befestigungsabschnitt 22 und dem Befestigungsstutzen 26 einstückig in einem Kunststoff-Spritzgussverfahren hergestellt.

Die Sicherung 40 ist als einfaches Stanz-Biege-Teil aus Blech ausgebildet. In einer Variation kann dieses jedoch aus Kunststoff oder faserverstärktem Kunststoff oder einem anderen Werkstoff wie Keramik, hergestellt sein.

Der Flanschabschnitt 44 setzt im Betrieb direkt auf der dem freien Ende 30 der Wischerwelle 16 zugewandten Stirnseite des rohrförmigen Abschnitts 15 auf. Zwischen Flanschabschnitt 44 und dem rohrförmigen Abschnitt 15 können zusätzlich auch eine oder mehrere Anlaufscheiben vorgesehen sein.

Der Verschlußabschnitt 46 ist buchsenarlig geformt und übergreift das Ende des rohrförmigen Abschnitts 15 des Wischerlagers 14 deckelartig. Ergänzend können hier auch noch Dichtelemente vorgesehen sein, um das Wischerlager 14 vor eindringendem Wasser und Schmutz zu schützen.

## Patentansprüche

1. Scheibenwischvorrichtung (10), insbesondere für ein Kraftfahrzeug, mit mindestens einem Wischerlager (14), das mindestens eine Wischerwelle (16) trägt, die zumindest einen Einstich (48) aufweist, in dem eine Sicherung (40) zur axialen Fixierung der Wischerwelle (16) im Wischerlager (14) angeordnet ist, die durch Einwirken einer definierten axialen Kraftkomponente (F) auf der Wischerwelle (16) verschiebbar ist, wodurch die Wischerwelle (16) gegenüber dem Wischerlager (14) verschiebbar ist, wobei die Sicherung (40) einen Buchsenabschnitt (42) mit einer Eindrückung (50) aufweist, die in den Einstich (48) der Wischerwelle (16) eingreift, wobei ein rohrförmiger Abschnitt (15) des Wischerlagers (14) von der Wischerwelle (16) durchgriffen wird, wobei an den Buchsenabschnitt (42) ein Flanschabschnitt (44) angefügt ist, der mit dem Wischerlager (14) wirkverbunden ist, **dadurch gekennzeichnet, dass** an den Flanschabschnitt (44) ein buchsenförmiger Verschlussabschnitt (46) angefügt ist, der das Ende des rohrförmigen Abschnitts (15) deckelartig übergreift.

2. Scheibenwischvorrichtung (10) nach Anspruch 1, **dadurch gekennzeichnet, dass** der Einstich (48) radial umlaufend, insbesondere wannenförmig, ausgebildet ist

3. Scheibenwischvorrichtung (10) nach einem der vorhergehenden Ansprüche, **dadurch gekennzeichnet, dass** die Eindrückung (50) radial umlaufend ausgebildet ist.

4. Scheibenwischvorrichtung (10) nach Anspruch 3, **dadurch gekennzeichnet, dass** die Eindrückung (50) im Querschnitt wannenförmig ausgebildet ist.

5. Scheibenwischvorrichtung (10) nach einem der vorhergehenden Ansprüche, **dadurch gekennzeichnet, dass** die Sicherung (40) im wesentlichen rotationssymmetrisch und im Querschnitt im wesentlichen S-förmig ausgebildet ist.

6. Scheibenwischvorrichtung (10) nach einem der vorhergehenden Ansprüche, **dadurch gekennzeichnet, dass** die Sicherung (40) im wesentlichen rotationssymmetrisch ausgebildet ist und einen radialen Spalt aufweist

7. Scheibenwischvorrichtung (10) nach einem der vorhergehenden Ansprüche, **dadurch gekennzeichnet, dass** die Sicherung (40) zumindest teilweise als Stanz-Biege-Teil aus Blech ausgebildet ist.

8. Scheibenwischvorrichtung (10) nach einem der vorhergehenden Ansprüche, **dadurch gekennzeichnet, dass** die Sicherung (40) zumindest teilweise aus, insbesondere faserverstärktem Kunststoff ausgebildet ist.

## Claims

1. Window wiping device (10), in particular for a motor vehicle, comprising at least one wiper bearing (14) which carries at least one wiper shaft (16) which has at least one recess (48) in which a securing means (40) for axially fixing the wiper shaft (16) in the wiper bearing (14) is arranged, which securing means can be displaced by the action of a defined axial force component (F) on the wiper shaft (16), with the result that the wiper shaft (16) can be displaced with respect to the wiper bearing (14), wherein the securing means (40) comprises a bush portion (42) with an indentation (50) which engages in the recess (48) of the wiper shaft (16), wherein the wiper shaft (16) engages through a tubular portion (15) of the wiper bearing (14), wherein a flange portion (44) which is operatively connected to the wiper bearing (14) is attached to the bush portion (42), **characterized in that** a bush-shaped closure portion (46) is attached to the flange portion (44) and engages in the manner of a cover over the end of the tubular portion (15).

2. Window wiping device (10) according to Claim 1, **characterized in that** the recess (48) is designed to be radially encircling, in particular trough-shaped.

3. Window wiping device (10) according to either of the preceding claims, **characterized in that** the indentation (50) is designed to be radially encircling.

4. Window wiping device (10) according to Claim 3, **characterized in that** the indentation (50) is designed to be trough-shaped in cross section.

5. Window wiping device (10) according to one of the preceding claims, **characterized in that** the securing means (40) is designed to be substantially rotationally symmetrical and substantially S-shaped in cross section.

6. Window wiping device (10) according to one of the preceding claims, **characterized in that** the securing means (40) is designed to be substantially rotationally symmetrical and has a radial gap.

7. Window wiping device (10) according to one of the preceding claims, **characterized in that** the securing means (40) is formed at least partially as a stamped and bent part from sheet metal.

8. Window wiping device (10) according to one of the preceding claims, **characterized in that** the securing means (40) is formed at least partially from plastic, in particular fibre-reinforced plastic.

## Revendications

1. Dispositif d'essuie-glace (10), en particulier pour un véhicule automobile, comprenant au moins un palier d'essuie-glace (14) qui porte au moins un arbre d'essuie-glace (16) qui présente au moins une encoche (48) dans laquelle est disposée une fixation (40) pour la fixation axiale de l'arbre d'essuie-glace (16) dans le palier d'essuie-glace (14), laquelle peut être déplacée sous l'application d'une composante de force axiale définie (F) sur l'arbre d'essuie-glace (16), de sorte que l'arbre d'essuie-glace (16) puisse être déplacé par rapport au palier d'essuie-glace (14), la fixation (40) présentant une portion de douille (42) avec une impression (50) qui vient en prise dans l'encoche (48) de l'arbre d'essuie-glace (16), une portion tubulaire (15) du palier d'essuie-glace (14) étant engagée par l'arbre d'essuie-glace (16), une portion de bride (44) étant jointe à la portion de douille (42), et étant connectée fonctionnellement au palier d'essuie-glace (14), **caractérisé en ce qu'**une portion de fermeture (46) en forme de douille est jointe à la portion de bride (44) et vient en prise par le dessus à la manière d'un couvercle avec l'extrémité de la portion tubulaire (15).

2. Dispositif d'essuie-glace (10) selon la revendication 1, **caractérisé en ce que** l'encoche (48) est réalisée de manière radialement périphérique, notamment en forme de cuvette.

3. Dispositif d'essuie-glace (10) selon l'une quelconque des revendications précédentes, **caractérisé en ce que** l'empreinte (50) est réalisée de manière radialement périphérique.

4. Dispositif d'essuie-glace (10) selon la revendication 3, **caractérisé en ce que** l'empreinte (50) est réalisée en forme de cuvette en section transversale.

5. Dispositif d'essuie-glace (10) selon l'une quelconque des revendications précédentes, **caractérisé en ce que** la fixation (40) est réalisée essentiellement avec une symétrie de révolution et une forme essentiellement en S en section transversale.

6. Dispositif d'essuie-glace (10) selon l'une quelconque des revendications précédentes, **caractérisé en ce que** la fixation (40) est réalisée essentiellement avec une symétrie de révolution et présente une fente radiale.

7. Dispositif d'essuie-glace (10) selon l'une quelconque des revendications précédentes, **caractérisé en ce que** la fixation (40) est réalisée au moins en partie sous forme de pièce en tôle estampée-cintrée.

8. Dispositif d'essuie-glace (10) selon l'une quelconque des revendications précédentes, **caractérisé en ce que** la fixation (40) est réalisée au moins en partie à partir de plastique notamment renforcé par des fibres.
